# EUROPÄISCHE PATENTSCHRIFT

(11) **EP 1 269 045 B1**
(45) Veröffentlichungstag und Bekanntmachung des Hinweises auf die Patenterteilung: **08.09.2004**
(21) Anmeldenummer: 01921348.7
(22) Anmeldetag: 24.03.2001
(51) Int. Cl.: F16H 63/48

(54) **PARKSPERREN-SYSTEM FÜR EIN KRAFTFAHRZEUG-GETRIEBE**
PARKING BRAKE SYSTEM FOR A GEARBOX OF A MOTOR VEHICLE
SYSTEME DE FREIN DE STATIONNEMENT POUR BOITE DE VITESSES D'UN VEHICULE

(30) Priorität: 30.03.2000 DE 10015781
(43) Veröffentlichungstag der Anmeldung: 02.01.2003
(73) Patentinhaber: ZF FRIEDRICHSHAFEN AG, 88038 Friedrichshafen (DE)
(72) Erfinder: GIERER, Georg, 88079 Kressbronn (DE)
(86) Internationale Anmeldenummer: PCT/EP2001/003377
(87) Internationale Veröffentlichungsnummer: WO 2001/075336

(56) Entgegenhaltungen:
- EP-A- 0 103 533
- DE-A- 4 127 991
- DE-A- 19 834 156
- US-A- 2 963 115
- US-A- 4 615 355
- PATENT ABSTRACTS OF JAPAN vol. 007, no. 217 (M-245), 27. September 1983 (1983-09-27) & JP 58 110344 A (FUJI JUKOGYO KK), 30. Juni 1983 (1983-06-30)
- PATENT ABSTRACTS OF JAPAN vol. 007, no. 217 (M-245), 27. September 1983 (1983-09-27) & JP 58 110345 A (FUJI JUKOGYO KK), 30. Juni 1983 (1983-06-30)

## Beschreibung

Die Erfindung betrifft ein Parksperren-System für ein Kraftfahrzeug-Automatgetriebe oder ein automatisiertes Kraftfahrzeug-Schaltgetriebe nach dem Oberbegriff des Hauptanspruchs.

Üblicherweise weisen Automatgetriebe für Kraftfahrzeuge eine mechanisch wirkende Parksperreneinrichtung auf, bei der in Sperrstellung beispielsweise eine Sperrklinke in eine Verzahnung eines Parksperrenrades, das mit dem Abtrieb des Getriebes und somit mit einer Achse des Fahrzeugs verbunden ist, eingreift. Als Wirkverbindung zwischen Parksperre und deren Bedieneinrichtung im Innenraum des Kraftfahrzeugs sind mechanische und elektro-hydraulische Systeme bekannt. Mechanische Wirkverbindungen sind beispielsweise als Bowdenzug zwischen dem karosseriefesten Wählhebel und der am Automatgetriebe angeordneten elektro-hydraulischen Getriebesteuerung und der im Getriebegehäuse angeordneten Parksperrenbetätigung ausgeführt. Eine rein elektrische Wirkverbindung zwischen der Bedieneinrichtung des Automatgetriebes im Fahrzeug-Innenraum und der elektro-hydraulischen Getriebesteuerung bedingt eine Umsetzung des elektrischen Signals zur Parksperrenbetätigung in eine mechanische Bewegung der Sperrklinke.

Als ein wesentlicher Vorteil der rein elektrisch ausgeführten Wirkverbindung zwischen der Bedieneinrichtung des Automatgetriebes und der elektro-hydraulischen Getriebesteuerung kann der Ort der Bedieneinrichtung im Fahrzeug-Innenraum frei gewählt werden. Ein weiterer wesentlicher Vorteil ist die akustische Entkoppelung der Bedieneinrichtung vom Antriebsstrang des Kraftfahrzeugs.

Die DE 43 22 523 A1 beispielsweise beschreibt eine elektro-hydraulische Steuereinrichtung für ein Kraftfahrzeug-Automatgetriebe mit einer elektrisch ausgeführten Wirkverbindung zwischen der Bedieneinrichtung des Automatgetriebes im Fahrzeuginnenraum und der elektro-hydraulischen Getriebesteuerung, bei der die Betriebsstufen D, R und N durch Druckbeaufschlagung einzelner Schaltglieder eingelegt werden, während die Betriebsstufe P durch Drucklosschaltung aller Schaltglieder eingelegt wird. Diese Anordnung führt dazu, daß nicht nur in der Betriebsstufe P, sondern in allen Betriebsstufen des Wählhebels bei Druckausfall die Parksperre eingelegt wird. Das Einlegen der Parksperre erfolgt dabei über einen Federspeicher, das Auslegen der Parksperre hydraulisch. Die Bereitstellung des zum Auslegen erforderlichen Druckes erfolgt über den Öldruckkreislauf des Automatgetriebes. Um bei Ausfall der elektrischen Spannungsversorgung oder einem Defekt im elektronischen Steuergerät des Automatgetriebes oder defekter Getriebeölversorgung die eingelegte Parksperre entriegeln zu können, wird eine Notentriegelungseinrichtung offenbart, mittels welcher die Parksperre mechanisch entriegelt werden kann.

Die DE 198 34 156 A beschreibt ein Parksperren-System für ein Kraftfahrzeug-Automatgetriebe, bei dem die Parksperrenklinke infolge Verschieben durch einen Federspeicher einrastet und durch hydraulischen Druck, der über den Öldruckkreislauf des Automatgetriebes bereitgestellt wird, bei gleichzeitiger Vorspannung des Federspeichers entriegelt wird. Zur Verhinderung eines ungewollten Einrastens der Parksperre bei abgeschaltetem Hydraulikdruck ist eine mechanische Kugelverriegelung der hydraulischen Parksperren-Betätigungseinrichtung vorgesehen. Die Kugel-Verriegelung wird über einen Elektromagneten betätigt und in Verriegelungsstellung gehalten, derart, daß die Parksperre solange in Entriegelungsstellung verbleibt, wie der Magnet bestromt ist.

Die gattungsmäßige DE 41 27 991 C2 beschreibt ein Parksperren-System für ein Kraftfahrzeug-Automatgetriebe mit einer elektrisch ausgeführten Wirkverbindung zwischen der Bedieneinrichtung des Automatgetriebes im Fahrzeuginnenraum und dem schaltbaren Parksperren-Mechanismus, bei dem die Parksperre über einen mechanischen Federspeicher eingelegt und über eine elektro-hydraulische Steuereinrichtung mit Steuermedium Überdruck ausgelegt wird. Hierzu ist die Betätigungsstange, mit der die Parksperre in Sperrstellung gebracht und aus der Sperrstellung gelöst wird, gleichzeitig als Kolbenstange für einen einfach wirkenden Zylinder ausgebildet. Zum Auslegen der Parksperre und zum Halten der Parksperre im ausgelegten Zustand wird der Zylinder über ein Magnetventil mit Drucköl beaufschlagt. Die hydraulische Druckversorgung hierzu erfolgt vorzugsweise direkt über den Druckölkreislauf des Automatgetriebes, der auch die hydraulische Getriebesteuerung mit Drucköl versorgt. In Wählhebeposition P ist das Magnetventil in Sperrstellung und der Zylinder entlüftet. Im drucklosen Zustand fährt der Zylinder die Parksperre durch die Feder des Federspeichers in Sperrstellung. In einer Ausgestaltung wird vorgeschlagen, zusätzlich einen Überdruckspeicher mit Absperrventil vorzusehen, um die Parksperre in einem begrenzten Zeitraum bei stehendem Motor und damit fehlendem Pumpendruck im ausgelegten Zustand halten zu können. Anstelle der Öldruckversorgung kann auch eine pneumatische Druckversorgung vorgesehen sein.

Aus der JP 58-110344 A ist ein Parksperren-System für ein Getriebe bekannt, bei dem zusätzlich zu einer mechanischen Parksperren-Betätigungseinrichtung eine automatische, pneumatische Parksperren-Betätigungseinrichtung vorgesehen ist. Dabei erfolgt das Verriegeln der Parksperre über einen Federspeicher, der auf einen Bolzen wirkt, der beim Betätigen der Parksperre in die Verzahnung eines üblichen Parksperren-Rades eingreift. Die zusätzliche pneumatische Betätigungseinrichtung wirkt ebenfalls auf den Bolzen und wird über ein Magnetventil in Abhängigkeit von Fahrbedingungen angesteuert, wobei die pneumatische Energie als Unterdruck einem Ansaugsystem des Antriebsmotors entnommen wird. Die zusätzliche pneumatische Parksperren-Betätigungseinrichtung arbeitet also als automatische Fahrzeug-Feststellbremse im normalen Fahrbetrieb.

Nachteilig bei den bekannten Systemen ist, daß bei Ausfall der Druckversorgung des Parksperren-Systems, also beispielsweise bei Motorstillstand oder bei Ausfall des Druckkreislaufs des Automatgetriebes, die dann eingelegte Parksperre ohne eine mechanische Notentriegelung nicht mehr gelöst werden kann. Ist eine mechanische Notentriegelung der Parksperre vorgesehen, die nur von außerhalb des Fahrzeug-Innenraums zugänglich ist, beispielsweise im Motorraum, wird zwar eine akustische Kopplung, beispielsweise durch einen Bowdenzug, vom Getriebe zum Innenraum hin vermieden, jedoch ist deren Bedienung eher umständlich. Außerdem kann der Fahrer ein bei der-Betätigung der Notentriegelung versehentlich wegrollendes Fahrzeugs nicht unmittelbar anhalten. Eine vom Fahrzeug-Innenraum aus zugängliche mechanische Notentriegelung der Parksperre wiederum hat die bekannten akustischen Nachteile der Körperschall-Kopplung des Getriebes zum Fahrzeug-Innenraum.

Aufgabe der Erfindung ist es, ein Parksperren-System, welches eine elektrische Wirkverbindung zwischen Parksperre und deren Bedieneinrichtung im Innenraum des Kraftfahrzeugs, einen Federspeicher zum Einlegen der Parksperre, und eine elektro-hydraulische oder elektro-pneumatische Einrichtung zum Auslegen der Parksperre aufweist, dahingehend zu verbessern, daß ein Lösen der Parksperre bei stehendem Antriebsmotor des Kraftfahrzeuges und bei Ausfall der Druckversorgung des Getriebes möglich ist, ohne eine mechanische Notentriegelungseinrichtung der Parksperre.

Erfindungsgemäß gelöst wird diese Aufgabe durch ein Parksperren-System mit den Merkmalen des Hauptanspruchs. Weitere vorteilhafte Ausgestaltungen der Erfindung ergeben sich aus den Unteransprüchen.

Bei stehendem Antriebsmotor des Kraftfahrzeuges steht auch die üblicherweise mit der Motorwelle verbundene Druckölpumpe des Getriebes. Somit kann das Drucköl-System des Getriebes keine direkte Energie über die Ölpumpe für eine aktive Betätigung der Löseeinrichtung der Parksperre liefern. Ein in den Druckkreislauf eines Automatgetriebes integrierter Überdruckspeicher, wie in der DE 41 27 991 C2 vorgeschlagen, wird durch innere systembedingte Le-ckagen schon nach vergleichsweise geringer Zeit nicht genügend Betätigungsdruck liefern können. Auch weitere Überdruckquellen, die mit dem Antriebsmotor verbunden sind, beispielsweise ein pneumatischer Kompressor zur Druckluftbeaufschlagung von automatisierten Gangschaltsystemen, oder eine Hochdruck-Servopumpe einer Bremskraftanlage, können somit nicht als Energiequellen für die Löseeinnrichtung der Parksperre herangezogen werden. Eine passive Betätigung der Löseeinrichtung der Parksperre, beispielsweise über einen zusätzlichen Federspeicher, der bei Druckausfall wirkt, ist sicherheitstechnisch kritisch und kann zu ungewolltem Wegrollen des Fahrzeugs führen.

Die Verwendung von in Akkumulatoren gespeicherter elektrischer Energie, wie sie im Kraftfahrzeug üblicherweise verfügbar ist, zur Betätigung der Löseeinrichtung der Parksperre würde im Bedarfsfall relativ große Stromstärken bedingen, insbesondere bei verspannter Parksperre, beispielsweise beim Auslegen der Parksperre am Hang. Weiterhin sind zusätzliche Bauteile erforderlich, beispielsweise Betätigungsmagnet oder Elektromotor mit Reduziergetriebe.

Erfindungsgemäß ist nun vorgesehen, die Löseeinrichtung der Parksperre durch Beaufschlagung mit Unterdruck, der in einem Unterdruckspeicher gespeichert ist, zu betätigen. In besonders vorteilhafter Weise stehen Unterdrucksysteme mit ausreichenden Leistungsreserven für eine Parksperren-Entriegelung in praktisch allen Kraftfahrzeugen zur Verfügung.

Der Unterdruck kann dabei in einfacher Weise direkt aus dem Ansaugsystem des antreibenden Verbrennungsmotors entnommen und für die Betätigung der Lösevorrichtung der Parksperre zwischengespeichert werden. Somit steht diese Energiequelle auch bei stehendem Antriebsmotor für die Parksperrenentriegelung zur Verfügung. Gegenüber einem technisch an eine bestehende Getriebehydraulik angeschlossenen Öldruckspeicher ergibt sich der Vorteil der längeren Druckhaltezeit durch Entfall der getriebehydraulikspezifischen Leckage.

An einer Ausbildung der Erfindung kann auch vorgesehen sein, daß der Unterdruck zum Betätigen der Parksperren-Löseeinrichtung durch ein Zusatzaggregat des das Getriebe antreibenden Motors bereitgestellt wird.

In einer anderen Ausbildung der Erfindung wird vorgeschlagen, den Unterdruck zur Betätigung der Löseeinrichtung der Parksperre aus dem Bremssystem des Kraftfahrzeugs zu entnehmen. Unterdruckunterstützte Bremsanlagen sind im Kraftfahrzeugbau sehr weit verbreitet, insbesondere bei Personenkraftwagen und leichten Nutzfahrzeugen. Somit kann in sehr vielen Fällen auf einen im Kraftfahrzeug bereits vorhandenen Unterdruckspeicher zurückgegriffen werden. In sehr vorteilhafter Weise ist der Zusatzaufwand bei der Implementierung der erfindungsgemäßen Löseeinrichtung der Parksperre entsprechend gering.

Erfindungsgemäß ist die unterdruckbetätigte Löseeinrichtung der Parksperre zusätzlich zu einer im Normalbetrieb, d.h. bei laufendem Antriebsmotor, wirksamen elektro-hydraulischen oder elektro-pneumatischen Betätigungseinrichtung der Parksperre vorgesehen. Erfindungsgemäß wird die Sperrstellung einer eingelegten Parksperre bei vorhandenem hydraulischen oder pneumatischen Überdruck in bekannter Weise durch Öl- oder Luftdruck gelöst. Bei stehendem Antriebsmotor wird die Parksperre erfindungsgemäß durch Unterdruck ausgelegt. In vorteilhafter Weise wird der Unterdruckbedarf hierdurch auf einen sehr kleinen Betriebsbereich des Fahrzeugs beschränkt, da eine Parksperrenbetätigung im Regelfall bei laufendem Antriebsmotor vorgenommen wird. Bei laufendem Antriebsmotor wird diesem also keine zusätzliche Energie entzogen und Motorfunktionen, beispielsweise die Leerlaufregelung, und die Funktion der Fahrzeugbremse nicht beeinlußt.

In weiteren Ausgestaltungen der Erfindung wird vorgeschlagen, die unterdruckbetätigte Löseeinrichtung der Parksperre über ein Magnetventil durch die üblicherweise vorhandene elektronischen Steuerung des Automatgetriebes bzw. automatisierten Schaltgetriebes oder durch dessen Bedieneinrichtung anzusteuern. Insbesondere in Verbindung mit einem parallelen Vorhandensein von unterdruckbetätigter Löseeinrichtung und elektro-hydraulischer bzw. elektropneumatischer Betätigungseinrichtung der Parksperre ergeben sich hierdurch Vorteile bei der bedarfsgerechten Ansteuerung der Lösevorrichtung.

In einer weiteren Ausbildung der Erfindung wird vorgeschlagen, die unterdruckbetätigte Löseeinrichtung der Parksperre derart auszubilden, daß eine zusätzliche elektrische Notentriegelung der Parksperre vom Fahrer manuell ausgelöst werden kann. Vorzugsweise ist diese als elektrischer Schalter ausgebildet, der auf das die Löseeinrichtung ansteuernde Magnetventil wirkt. In vorteilhafter Weise kann dieser elektrische Schalter im Innenraum des Fahrzeugs angeordnet sein, beispielsweise im Bereich der Bedieneinrichtung des Getriebes oder auch in die Bedieneinrichtung integriert. Hierdurch ist ein einfache und fehlbedienungssichere Betätigungsmöglichkeit für den Fahrer gegeben, beispielsweise bei Ausfall von Motor und Getriebe. Durch die elektrische Notentriegelung bleiben im Gegensatz zu einer im Fahrzeuginnenraum angeordneten mechanischen Notentriegelung alle Vorteile der akustischen Entkoppelung von Getriebe und Fahrzeuginnenraum erhalten.

In einer anderen Ausbildung der Erfindung wird vorgeschlagen, die unterdruckbetätigte Löseeinrichtung der Parksperre derart auszubilden, daß eine zusätzliche elektrische Notentriegelung der Parksperre von der elektronischen Steuerung des Antriebsmotors betätigt werden kann. Vorzugsweise ist diese als elektrische Ansteuerung des die Parksperren-Löseeinrichtung ansteuernden Magnetventils ausgebildet, derart, daß bei Ausfall der elektronischen Getriebesteuerung ein noch vorhandenes Betätigungssignal der Getriebe-Bedieneinrichtung von der elektronischen Motorsteuerung ausgewertet und ein gewelltes Verlassen der Parkposition umgesetzt wird. In vorteilhafter Weise kann hierdurch die Mobilität des Fahrzeugs bei einem entsprechenden Ausfall erhöht werden, da üblicherweise bei einer rein elektrischen Wirkverbindung zwischen Getriebe-Bedieneinrichtung und elektronischer Getriebesteuerung eine eingelegte Parksperre mangels Verfügbarkeit eines Fahrpositionssignals nicht mehr ausgelegt werden kann.

Die räumliche Anordnung der erfindungsgemäßen Parksperren-Betätigung ist nicht beschränkt auf die Integration im Getriebegehäuse, sondern kann auch außerhalb des Gehäuses angeordnet sein. Auch der Sperrmechanismus der Parksperre kann außerhalb des Getriebegehäuses angeordnet sein, beispielsweise als Komponente einer mit dem Getriebeabtrieb verbundene Achse des Fahrzeugs.

Ein bevorzugtes Ausführungsbeispiel der Erfindung ist in der nachfolgenden Beschreibung mit der zugehörigen Zeichnung dargestellt.

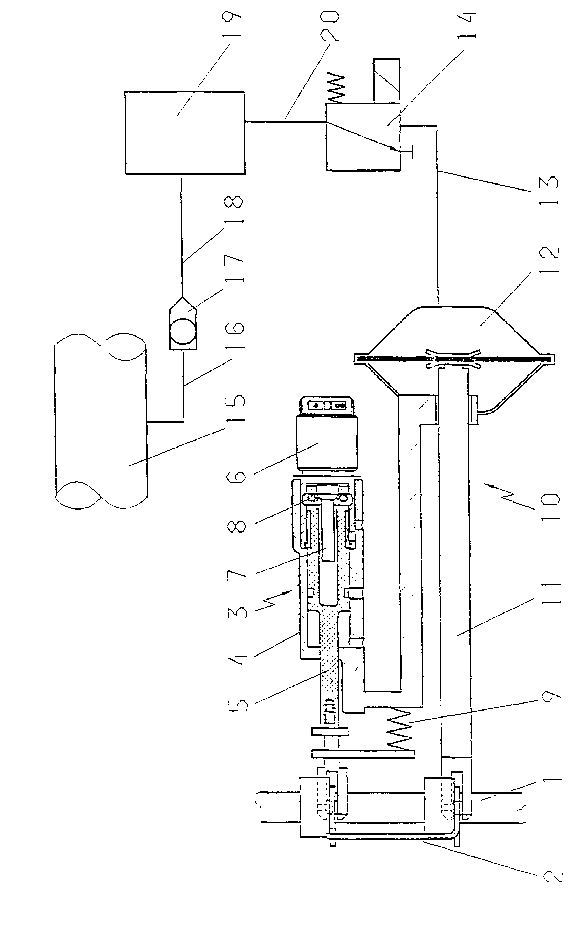

Die einzige Figur zeigt ein Betätigungselement 1 einer nicht näher dargestellen Sperreinrichtung einer Parksperre. Die Sperreinrichtung kann beispielsweise als eine in einem Gehäuse eines Automatgetriebes oder automatisierten Schaltgetriebes angeordnete Sperrklinke ausgebildet sein, die in Sperrstellung in ein mit dem Abtrieb des Getriebes verbundenen Parksperrenrad eingreift und das Getriebe somit blokkiert. In das Betätigungselement 1 der Sperreinrichtung greifen eine elektro-hydraulische Betätigungseinrichtung 3 und eine unterdruckbetätigbare Löseeinrichtung 10 für die Parksperre über eine Koppeleinrichtung 2 ein. In vorteilhafter Weise ist die Koppeleinrichtung 2 derart ausgeführt, daß die Betätigungseinrichtung 3 und die Löseeinrichtung 10 unabhängig voneinander auf das Betätigungselement 1 der Sperreinrichtung wirken können. Auf diese Weise kann beispielsweise die elekro-hydraulische Betätigungseinrichtung 3 in bekannter Weise so ausgeführt werden, daß sie bei Verfügbarkeit von hydraulischer Energie, also insbesondere bei laufendem Antriebsmotors des Getriebes, alleine angesteuert wird zum Einlegen und Auslegen der Parksperre. Die Konstruktion der unterdruckbetätigbaren Löseeinrichtung 10 kann hierbei in vorteilhafter Weise entsprechend einfach ausgeführt sein. Ein weiterer Vorteile dieser parallelen Anordnung von elekro-hydraulischer Betätigungseinrichtung 3 und unterdruckbetätigbarer Löseeinrichtung 10 ist die Beschränkung des Auslegens der Parksperre über Unterdruck auf wenige Einsatzfälle, wie schon vorher beschrieben.

Anstelle der elektro-hydraulischen Betätigungseinrichtung 3 kann selbstverständlich auch eine elektro-pneumatischen Parksperren-Betätigungseinrichtung vorgesehen sein. In einer anderen nicht beanspruchten Ausführung kann auch vorgesehen sein, daß die unterdruckbetätigbare Löseeinrichtung 10 die Funktion des Auslegens der Parksperre alleinig übernimmt.

Die Figur zeigt die beispielhafte elekro-hydraulische Betätigungseinrichtung 3 in der Stellung der eingelegten Parksperre. Zum Auslegen der Parksperre bei vorhandenem hydraulischen Druck wird nun in bekannter Weise ein in einem Zylinder 4 gelagerter Kolben mit Kolbenstange 5 hydraulisch in eine Auslegeposition gefahren. Die Druckbeaufschlagung erfolgt dabei über eine nicht dargestellte elektro-hydraulische Steuerung des Getriebes infolge von Signalen einer ebenfalls nicht dargestellten Bedieneinrichtung des Getriebes. Gleichzeitig mit dem Auslegen der Parksperre wird ein Federspeicher 9 vorgespannt, der in bekannter Weise ein Einlegen der Parksperre bei einer Drucklos-Schaltunc der Betätigungseinrichtung 3 ansteuert. Zum Schutz vor ungewolltem Wiedereinlegen der Parksperre, beispielsweise durch einen temporären Druckeinbruch in der hydraulischen Versorgung des Getriebes, ist ebenfalls in bekannter Weise eine Verriegelungseinrichtung 8 vorgesehen, die im ausgelegten Zustand der Parksperre durch einen bestromten Elektromagneten 6 über eine Betätigungseinrichtung 7 in Verriegelungsposition gebracht wird. Die Verriegelungseinrichtung 8 verbleibt solange in Verriegelungsposition, wie der Elektromagnet 6 bestromt ist. Die Bestromung des Elektromagneten erfolgt dabei zweckmäßigerweise durch die Getriebesteuerung aufgrund von Signalen der Bedieneinrichtung des Getriebes, beispielsweise eines Wählhebels, kann aber auch direkt über die Bedieneinrichtung und das elektrische Bordnetz der Kraftfahrzeugs gesteuert werden.

Die Figur zeigt die erfindungsgemäße unterdruckgesteuerte Löseeinrichtung 10 in der Stellung der eingelegten Parksperre. Zum Auslegen der Parksperre bei nicht vorhandenem hydraulischen Druck, also bei nicht funktionsfähiger Betätigungseinrichtung 3, wird das Betätigungselement 1 der Parksperren-Sperreinrichtung durch ein Betätigungselement 11 mechanisch betätigt. Hierzu wird eine mit dem Betätigungselement 11 verbundene Unterdruckdose 12 mit Unterdruck beaufschlagt und so das Betätigungselement 11 in eine Auslegeposition gefahren. Gleichzeitig mit dem unterdruckgesteuerten Auslegen der Parksperre wird der zuvor entspannte Federspeicher 9 wieder vorgespannt. Auf diese Weise ist sichergestellt, daß die Parksperre bei Abbau des Unterdrucks wieder einrastet und das Fahrzeug sicher in seiner Parkposition verbleibt.

Die Beaufschlagung der Unterdruckdose 12 mit Unterdruck erfolgt erfindungsgemäß über eine Leitung 13 und ein Magnetventil 14. Dabei wird der Unterdruck aus einem nicht näher dargestellten Ansaugsystem 15 eines üblicherweise zum Antrieb eingesetzten Verbrennungsmotors des Kraftfahrzeugs entnommen und über eine Unterdruckleitung 16, ein Rückschlagventil 17, eine Unterdruckleitung 18, einen Unterdruckspeicher 19 und eine Unterdruckleitung 20 zu dem Magnetventil 14 geführt. Der Unterdruckspeicher 19 gewährleistet im Zusammenwirken mit dem Rückschlagventil 17 die funktionelle Verfügbarkeit der erfindungsgemäßen Löseeinrichtung 10 für die Parksperre auch bei stehendem Verbrennungsmotor über einen größeren Zeitraum. Dabei ist von Vorteil, das Volumen des Unterdruckspeichers 19 auf den Leistungsbedarf der Löseeinrichtung 10 abzustimmen und hinreichend groß zu dimensionieren. Die erfindungsgemäße Verwendung des Saugunterdrucks des Verbrennungsmotors als Energiequelle zum Auslegen der Parksperre ist besonders vorteilhaft, weil sie im überwiegenden Teil aller Kraftfahrzeugen verfügbar ist.

In einer anderen Ausbildung der Erfindung wird vorgeschlagen, den Unterdruck zum Betätigen der Löseeinrichtung 10 dem Brems-System zu entnehmen. Besonders vorteilhaft ist beispielsweise der direkt Anschluß der Unterdruckleitung 20 an einen Unterdruck-Bremskraftverstärker, wie er üblicherweise in Kraftfahrzeugen, insbesondere in fast allen PKW's und leichten LKW's, eingesetzt wird und bereits einen Anschluß an das Ansaugsystem des Verbrennungsmotors, ein Rückschlagventil und ein Unterdruckspeicher aufweist. In besonders vorteilhafter Weise ergeben sich durch die verringerte Anzahl an zusätzlichen Bauelemente für die erfindungsgemäße Parksperren-Löseeinrichtung deutliche Kostenvorteile.

In einer anderen Ausbildung der Erfindung kann vorgesehen sein, des Unterdruck zum Betätigen der Löseeinrichtung 10 über eine separate Unterdruckpumpe bereitzustellen, die beispielsweise elektrisch angetrieben wird. In vorteilhafter Weise kann die Dimensionierung der Unterdruckpumpe auf den Druckbedarf der Löseeinrichtung 10 hin optimiert werden und die Zuschaltung bedarfsgerecht und damit energiesparend erfolgen. Bei geeigneter Auslegung und Anordnung der Unterdruckpumpe können Rückschlagventil 17 und Druckspeicher 19 oder auch nur der Druckspeicher 19 entfallen, mit jeweils den entsprechenden Unterdruckleitungen.

In einer Weiterbildung der Erfindung kann vorgesehen sein, das Magnetventil 14 direkt an der Unterdruckdose 12 anzuordnen. In vorteilhafter Weise entfällt hierdurch die Unterdruckleitung 13 mit ihren Druckanschlüssen. Weiterhin kann bei einer getriebeinternen oder getriebenahen Anordnung von Löseeinrichtung 10 und Betätigungseinrichtung 3 die elektrische Verkabelung des Magnetventils 14 in den bereits vorhandenen Kabelbaum des Getriebes integriert werde. In einer anderen Weiterbildung der Erfindung kann vorgesehen sein das Magnetventil 14 direkt am Druckspeicher 19 anzuordnen. In vorteilhafer Weise entfällt hierdurch die Unterdruckleitung 20 mit ihren Druckanschlüssen.

Durch die Erfindung kann die Parksperre also auch bei stehendem Antriebsmotor des Fahrzeugs und normal funktionsfähiger Getriebesteuerung durch den Fahrer in ihm bekannter Weise weitgehend uneingeschränkt gelöst werden. Die akustische Entkoppelung zwischen dem Fahrzeuginnenraum und dem Getriebe bleibt dabei durch die elektrische Wirkverbindung zwischen der Bedieneinrichtung und der Parksperren-Löseeinrichtung 10 erhalten. In einer anderen Ausgestaltung kann anstelle des Magnetventils 14 auch ein pneumatisch oder hydraulisch betätigtes Ventil vorgesehen sein, wobei die akustische Entkoppelung zwischen dem Fahrzeuginnenraum und dem Getriebe durch zusätzliche konstruktive Maßnahmen sichergestellt werden kann.

In einer Weiterbildung der Unterdruckansteuerung der Parksperren-Löseeinrichtung 10 wird vorgeschlagen, die elektrische Ansteuerung des Magnetventil 10 so auszubilden, daß eine elektrische Notentriegelung der Parksperre möglich ist. Eine vorteilhafte Ausgestaltung hierzu ist die Steuerung des Magnetventils 14 über die elektronische Steuerung des Antriebsmotors aufgrund von Signalen der Bedieneinrichtung des Getriebes. Bei Verwendung einer rein elektrischen Wirkverbindung zwischen der Bedieneinrichtung des Getriebes und der Getriebehydraulik und Getriebemechanik sind die elektrischen Signale der Bedieneinrichtung üblicherweise auch für andere elektronische Steuergeräte des Fahrzeugs verfügbar, beispielsweise über ein CAN-Datenbus-System.

Eine andere vorteilhafte Ausgestaltung der elektrischen Notentriegelung ist ein Schalter oder Taster im Innenraum des Fahrzeugs zur Bestromung des Magnetventils 14. Vorzugsweise wird der Schalter oder Taster dabei in räumlicher Nähe zur Bedieneinrichtung des Getriebes angeordnet oder in die Bedieneinrichtung integriert.

Durch die elektrische Notentriegelung kann der Fahrer die Parksperre auch bei defekter elektronischen Getriebesteuerung, defekter Kommunikation zwischen Bedieneinrichtung des Getriebes und elektronischer Getriebesteuerung oder defekter hydraulischer Versorgung des Getriebes sowohl bei laufendem als auch bei stehendem Antriebsmotor auslegen, ohne akustische Nachteile der bekannten mechanischen Einrichtungen zur Notentriegelung der Parksperre, die vom Fahrzeuginnenraum aus zugänglich sind. Gegenüber den bekannten mechanischen Einrichtungen zur Notentriegelung der Parksperre, die nur von außerhalb des Fahrzeuginnenraums aus zugänglich sind, ergeben sich deutliche Bedienungerleichterung für den Fahrer.

### Bezugszeichen

- 1: Betätigungselement der Parksperren-Sperreinrichtung
- 2: Koppeleinrichtung
- 3: elektro-hydraulische Betätigungseinrichtung für die Parksperre
- 4: Zylinder
- 5: Kolben mit Kolbenstange
- 6: Elektromagnet
- 7: Betätigungseinrichtung der Verriegelung
- 8: Verriegelungseinrichtung
- 9: Federspeicher
- 10: Löseeinrichtung für die Parksperre
- 11: Betätigungselement der Löseeinrichtung
- 12: Unterdruckdose
- 13: Unterdruckleitung
- 14: Magnetventil
- 15: Ansaugsystem des Verbrennungsmotors
- 16: Unterdruckleitung
- 17: Rückschlagventil
- 18: Unterdruckleitung
- 19: Unterdruckspeicher
- 20: Unterdruckleitung

## Patentansprüche

1. Parksperren-System für Kraftfahrzeug-Getriebe, mit einer Parksperre zum Blockieren oder Freigeben des Getriebes aufgrund von Betätigungssignalen einer Bedieneinrichtung, indem insbesondere eine Sperrklinke in ein mit dem Abtrieb des Getriebes verbundenes Parksperrenrad ein- oder ausrastet, mit einer elektrischen Wirkverbindung zwischen der Bedieneinrichtung im Innenraum des Kraftfahrzeugs und der Parksperre, mit einem Federspeicher (9) zum Einlegen der Parksperre, mit einer elektro-hydraulischen oder elektro-pneumatischen Betätigungseinrichtung (3) zum Lösen der Parksperre, **dadurch gekennzeichnet, daß** zusätzlich zu der elektro-hydraulischen bzw. elektro-pneumatischen Betätigungseinrichtung (3) eine Löseeinrichtung (10) für die Parksperre vorgesehen ist, die zum Lösen der Parksperre mit einem getriebeunabängigen Unterdruck beaufschlagbar ist, wobei das Auslegen der Parksperre bei laufendem Antriebsmotor und/oder bei Verfügbarkeit von hydraulischem bzw. pneumatischen Überdruck durch die elektro-hydraulische bzw. elektro-pneumatische Betätigungseinrichtung (3) erfolgt, und wobei das Auslegen der Parksperre bei stehendem Antriebsmotor und nicht verfügbarem hydraulischen bzw. pneumatischen Überdruck durch die Löseeinrichtung (10) erfolgt.

2. Parksperren-System nach Anspruch 1, **dadurch gekennzeichnet, daß** der Unter-druck vom Antriebsmotor des Kraftfahrzeugs oder von einem Zusatzaggregat des Antriebsmotors bereitgestellt wird, insbesondere auch bei stehendem Antriebsmotor.

3. Parksperren-System nach Anspruch 2, **dadurch gekennzeichnet, daß** der Unterdruck vom Ansaugsystem (15) des Antriebsmotors entnommen wird.

4. Parksperren-System nach Anspruch 1, **dadurch gekennzeichnet, daß** der Unterdruck vom Bremssystem des Kraftfahrzeugs bereitgestellt wird, insbesondere auch bei stehendem Antriebsmotor.

5. Parksperren-System nach einem der vorigen Ansprüche, **dadurch gekennzeichnet, daß** die Löseeinrichtung (10) der Parksperre eine Unterdruckdose (12) aufweist.

6. Parksperren-System nach einem der vorigen Ansprüche, **dadurch gekennzeichnet, daß** die Löseeinrichtung (10) der Parksperre einen Unterdruckspeicher (19) aufweist.

7. Parksperren-System nach einem oder mehrerer der vorigen Ansprüche, **dadurch gekennzeichnet, daß** die Ansteuerung der Löseeinrichtung (10) der Parksperre über ein Magnetventil (14) erfolgt, das von einer elektronischen Steuerung des Getriebes ansteuerbar ist.

8. Parksperren-System nach einem oder mehrerer der vorigen Ansprüche, **dadurch gekennzeichnet, daß** die Ansteuerung der Löseeinrichtung (10) der Parksperre über ein Magnetventil (14) erfolgt, das über die Bedieneinrichtung des Getriebes elektrisch ansteuerbar ist.

9. Parksperren-System nach einem oder mehrerer der vorigen Ansprüche, **dadurch gekennzeichnet, daß** die Ansteuerung der Löseeinrichtung (10) der Parksperre eine elektrische Notentriegelung aufweist, wobei das Magnetventil (14) manuell elektrisch betätigbar ist, vorzugsweise vom Innenraum des Kraftfahrzeugs aus.

10. Parksperren-System nach einem oder mehrerer der vorigen Ansprüche, **dadurch gekennzeichnet, daß** die Ansteuerung der Löseeinrichtung (10) Parksperre eine elektrische Notentriegelung aufweist, wobei das Magnetventil (14) von einer elektronischen Steuerung des Antriebsmotors des Kraftfahrzeugs ansteuerbar ist.

11. Parksperren-System nach einem oder mehrerer der Ansprüche 1 bis 10, **dadurch gekennzeichnet, daß** die Betätigungseinrichtung (3) und die Löseeinrichtung (10) der Parksperre im Gehäuse des Getriebe angeordnet sind.

12. Parksperren-System nach einem oder mehrerer der Ansprüche 1 bis 10, **dadurch gekennzeichnet, daß** die,Parksperre und/oder die Betätigungseinrichtung (3) der Parksperre und/oder die Löseeinrichtung (10) der Parksperre außerhalb des Getriebegehäuses angeordnet sind.

## Claims

1. Parking mechanism for automotive transmissions, with a parking lock for locking or releasing the transmission in response to the actuating signals of an operating device by means of a detent engaging or disengaging with a parking-mechanism ratchet wheel linked to the output of the transmission, and with an effective electric connection between the operating device in the interior of the vehicle and the parking lock, and with a spring-type actuator (9) for parking-lock engagement, and with an electrohydraulic or electropneumatic control device (3) for releasing the parking lock, **characterized in that** in addition to the electrohydraulic or electropneumatic control device (3) there is a parking-lock release device (10), which can be actuated by a transmission-independent negative pressure to release the parking lock, with disengagement of the parking lock taking place while the driving engine is running and/or while hydraulic or pneumatic positive pressure is provided by the electrohydraulic or electropneumatic control device (3), and with disengagement of the parking lock taking place while the driving engine is shut off and while no hydraulic or pneumatic positive pressure is provided by the release device (10).

2. Parking mechanism according to claim 1, **characterized in that** negative pressure is provided by the driving engine of the motor vehicle or by an auxiliary unit of the driving engine, particularly also when the driving engine is shut off.

3. Parking mechanism according to claim 2, **characterized in that** negative pressure is withdrawn from the intake system (15) of the driving engine.

4. Parking mechanism according to claim 1, **characterized in that** negative pressure is provided by the brake system of the motor vehicle, in particular also while the driving engine is shut off.

5. Parking mechanism according to one of the preceding claims; **characterized in that** the release device (10) of the parking lock features a vacuum unit (12).

6. Parking mechanism according to one of the preceding claims, **characterized in that** the release device (10) of the parking lock features a vacuum reservoir (19).

7. Parking mechanism according to one or several of the preceding claims, **characterized in that** control of the release device (10) of the parking lock is performed by a solenoid valve (14), which can be controlled by an ECU of the transmission.

8. Parking mechanism according to one or several of the preceding claims, **characterized in that** control of the release device (10) of the parking lock is performed by a solenoid valve (14), which can be electronically controlled by the operating device of the transmission.

9. Parking mechanism according to one or several of the preceding claims, **characterized in that** the control unit of the release device (10) of the parking lock features an electric emergency release, with the solenoid valve (14) being manually controllable, preferably from the interior of the motor vehicle.

10. Parking mechanism according to one or several of the preceding claims, **characterized in that** the control unit of the release device (10) of the parking lock features an electric emergency release, with the solenoid valve (14) being controllable by an electronic control unit of the driving motor of the motor vehicle.

11. Parking mechanism according to one or several of claims 1 through 10, **characterized in that** the control device (3) and the release device (10) of the parking lock are arranged in the housing of the transmission.

12. Parking mechanism according to one or several of claims 1 through 10, **characterized in that** the parking lock and/or the control device (3) of the parking lock and/or the release device (10) of the parking lock are arranged outside the transmission housing.

## Revendications

1. Système de frein de parking pour boîtes de vitesses de véhicules automobiles, doté d'un verrouillage de stationnement pour verrouiller ou débloquer la boîte de vitesses lors de la présence de signaux d'actionnement émis d'un dispositif de commande, et cela en particulier par l'action d'un cliquet de verrouillage engageant dans un pignon verrouillage de stationnement et désengageant de celui-ci et étant lié à la sortie de la boîte de vitesses, doté d'une liaison active électrique entre le dispositif de commande situé dans la cabine du véhicule automobile et le frein de parcage, équipé d'un accumulateur à ressort (9) pour engager le frein de parking, d'un dispositif d'actionnement électro-hydraulique ou électro-pneumatique (3) pour débloquer le verrouillage de stationnement, **caractérisé en ce qu'** est prévu - en plus du dispositif d'actionnement électro-hydraulique ou électro-pneumatique (3) - un dispositif de débloquage (10) du verrouillage de stationnement, celui-ci pouvant être pressurisé d'une sous-pression indépendante de la boîte de vitesses pour débloquer le verrouillage de stationnement, sachant que le dimensionnement du frein de parking est effectué avec moteur d'entraînement en marche et/ou lorsqu'une surpression hydraulique et/ou pneumatique est mise à disposition par l'intermédiaire du dispositif d'actionnement électro-hydraulique ou électro-pneumatique (3), et sachant que le dimensionnement du frein de parking est effectué avec moteur d'entraînement arrêté et/ou lorsqu'une surpression hydraulique et/ou pneumatique n'est pas mise à disposition par l'intermédiaire du dispositif de débloquage (10).

2. Système de frein de parking selon la revendication 1, **caractérisé en ce que** la sous-pression est mise à disposition par le moteur d'entraînement du véhicule automobile ou par un groupe auxiliaire du moteur d'entraînement, et cela en particulier également avec moteur d'entraînement arrêté.

3. Système de frein de parking selon la revendication 2, **caractérisé en ce que** la sous-pression est prise au système d'aspiration (15) du moteur d'entraînement.

4. Système de frein de parking selon la revendication 1, **caractérisé en ce que** la sous-pression est mise à disposition par le système de freinage du véhicule automobile, et cela en particulier également avec moteur d'entraînement arrêté.

5. Système de frein de parking selon une des revendications précédentes, **caractérisé en ce que** le dispositif de débloquage (10) du frein de parking comporte une capsule à dépression (12).

6. Système de frein de parking selon une des revendications précédentes, **caractérisé en ce que** le dispositif de débloquage (10) du frein de parking comporte un réservoir à dépression (19).

7. Système de frein de parking selon une ou plusieurs des revendications précédentes, **caractérisé en ce que** le pilotage du dispositif de débloquage (10) du frein de parking est effectué par l'intermédiaire d'une électrovanne (14) qui peut être commandée par un boîtier électronique de la boîte de vitesses.

8. Système de frein de parking selon une ou plusieurs des revendications précédentes, **caractérisé en ce que** le pilotage du dispositif de débloquage (10) du frein de parking est effectué par l'intermédiaire d'une électrovanne (14), qui peut être commandée par voie électrique par le dispositif d'actionnement de la boîte de vitesses.

9. Système de frein de parking selon une ou plusieurs des revendications précédentes, **caractérisé en ce que** le pilotage du dispositif de débloquage (10) du frein de parking comporte un dispositif de désaccouplement d'urgence électrique, sachant que l'électrovanne (14) peut être commandée manuellement et électriquement, en particulier à partir de la cabine du véhicule automobile.

10. Système de frein de parking selon une ou plusieurs des revendications précédentes, **caractérisé en ce que** le pilotage du dispositif de débloquage (10) du frein de parking comporte un dispositif de désaccouplement d'urgence électrique, sachant que l'électrovanne (14) peut être commandée par un boîtier électronique du moteur d'entraînement du véhicule automobile.

11. Système de frein de parking selon une ou plusieurs des revendications 1 à 10, **caractérisé en ce que** le dispositif d'actionnement (3) et le dispositif de débloquage (10) du frein de parking sont disposés dans le carter de la boîte de vitesses.

12. Système de frein de parking selon une ou plusieurs des revendications 1 à 10, **caractérisé en ce que** le frein de parking et/ou le dispositif d'actionnement (3) du frein de parking et/ou du dispositif de débloquage (10) du frein de parking sont disposés à l'extérieur de la boîte de vitesses.
